# EUROPEAN PATENT APPLICATION

(11) **EP 2 469 167 A1**
(43) Date of publication of application: **27.06.2012**
(21) Application number: 10196506.9
(22) Date of filing: 22.12.2010
(51) Int. Cl.: F23K 5/10, B01F 3/04

(54) **System for aerating liquid fuel with gas for a gas turbine and method for aerating liquid fuel with gas for a gas turbine**

(71) Applicant: Siemens Aktiengesellschaft, 80333 München (DE)
(72) Inventor: Nilsson, Ulf, Whetstone, Leicester, LE8 6HN (GB)

(57) **Abstract**

The present invention relates to a System for aerating liquid fuel (53) with gas (54) for a gas turbine (10), particularly for a Dry Low Emissions (DLE) Combustion System (22) of a gas turbine (10), and to a Method for aerating liquid fuel (53) with gas (54) for a gas turbine (10), particularly for a DLE Combustion System (22) of a gas turbine (10).

According to the invention a fuel feed (49) is provided for providing a gas turbine (10), particularly a DLE Combustion System (22) of a gas turbine (10), with liquid fuel (53). A flow body (60) provided with gas under pressure (54) higher than the pressure of said liquid fuel (53) is arranged in said fuel feed (49) flown by said liquid fuel (53) while flowing in said fuel feed (49). Said flow body (60) comprises a surface (62) with at least one outlet opening (61) for aerating said liquid fuel (53) with said gas under pressure (54).

## Description

### Background of the invention

The present invention relates to a system for aerating liquid fuel with gas for a gas turbine, particularly for a gas turbine operating with a Dry Low Emission (DLE) Combustion (DLE Combustion System). The invention further relates to a method for aerating liquid fuel with gas for a gas turbine, particularly for a DLE Combustion System of a gas turbine.

In a gas turbine known in the state of the art, for example as it is disclosed in EP 1 953 454 A1, a gas duct or gas flow path is routed through a combustion section/system located between a compressor and a turbine section. The combustion section may include an annular array of combustors. High pressure air from the compressor flows through the combustion section where it is mixed with fuel and burned. As mentioned above, the combustors each comprise a burner for igniting the air/fuel mixture especially during start up of the gas turbine.

Combustion gases exit the combustion section to power the turbine section which drives the compressor. In single-shaft arrangements a high-pressure and a low-pressure turbine of the turbine section are mechanically connected and together drive an output power shaft. In twin-shaft arrangements a low-pressure turbine (power turbine) is mechanically independent, i.e. only drives the output power shaft, and a high-pressure turbine, or so called compressor turbine, drives the compressor. This combination acts as a gas generator for the low-pressure turbine. The combustion gases exit the turbine section through an exhaust duct.

In recent years, increasingly stringent emissions standards have made a lean, premixed combustion more desirable in power generation and industrial applications than ever before, since this combustion mode provides low NOx and CO emissions without water addition. Lean, premixed combustion of natural gas or liquid fuel avoids the problems associated with diffusion combustion and water addition.

As a result, lean, premixed combustion has become a foundation for modern Dry Low Emissions (DLE) gas turbine combustion systems. The DLE turbines, for example as disclosed in EP 0 747 636 A1, being developed require precise control of the combustion process. The turbine pre-mixers and combustor must receive the correct mixture of air and fuel, and control the combustion temperature to limit emissions to acceptable levels.

Starting such DLE gas turbines on liquid fuel, i.e. premium fuel, e.g.diesel, is associated with poor reliability. A route chosen for the liquid DLE combustion system showing the lowest emissions is to use a high degree of atomization of the fuel in the main operation range. This leads to larger droplets and a less distributes fuel spray during start, due to a reduced mass flow, i.e. a reduced pressure/fuel feed pressure, which makes it harder for the fuel to ignite and the DLE gas turbine to start.

In addition to that, a further effect adding to the start problem is that a pressure head loss, i.e. by a gravitational effect by a location of a burner over ground relative to neighbouring burners, becomes more important due to the reduced fuel flow. This difference redistributes the fuel flow from higher burners to lower burners making it more difficult for the higher burners to ignite.

Further to these effects relating to the different operation modes, i.e. starting phase - main operation range, normally fixed geometry of the fuel conduits is used in gas turbines, designed for full load. Extending the start time is leading to an increase in the amount of unburned fuel passing through the gas turbine. A start optimized flow distribution using orifices would distort the full load distribution leading to higher emissions and lower component life.

A solution for these ignition difficulties by starting a gas turbine, particularly by starting a DLE gas turbine, could be a variable geometry using individual valves for each burner of the combustion system. But using individual valves is complex and costly. It is also difficult to achieve the tolerance required. Some other solutions have been proposed injecting a mixture comprising fuel gas into a liquid fuel nozzle during start to promote ignition, known as effervescent atomization.

### Summary of the invention

It is an objective of the present invention to provide a system and a method for supplying a gas turbine, particularly a Dry Low Emissions (DLE) Combustion System of a gas turbine, with liquid fuel whereby the above-mentioned shortcomings can be mitigated, and especially a more reliable ignition of burners of the gas turbine could be realized.

The objective is achieved, according to the present invention, by providing a method for aerating liquid fuel with gas for a gas turbine, particularly for a Dry Low Emissions (DLE) Combustion System of a gas turbine. A source of a gas under pressure higher than a pressure of said liquid fuel is provided and a flow body comprising at least one outlet opening is supplied with said gas under pressure. Said flow body is flown with said liquid fuel and said liquid fuel is aerated with said gas while exhausting said gas through said at least one outlet opening of said flow body into said liquid fuel while said liquid fuel passing said flow body.

The objective is also achieved, according to the present invention, by providing a system for aerating liquid fuel with gas for a gas turbine, particularly for a Dry Low Emissions (DLE) Combustion System of a gas turbine. The inventive system comprises a fuel feed for supplying a combustion system of a gas turbine with liquid fuel and a flow body with a feed supplying said flow body with gas under pressure higher than a pressure of said liquid fuel. Said flow body is arranged in said fuel feed flown by said liquid fuel while flowing in said fuel feed. Said flow body further comprises a surface with at least one outlet opening for exhausting said gas through said at least one outlet opening of said flow body into said liquid fuel to aerate said liquid fuel with said gas.

In other words - according to the invention a fuel feed is provided for supplying a gas turbine, particularly for supplying a DLE Combustion System of a gas turbine, with liquid fuel. A flow body is provided with gas under pressure higher than a pressure of said liquid fuel. The flow body, a three-dimensional body formed for example as a ball, cylinder or elongated body, is arranged in said fuel feed to be flown by, i.e. circulated around by, said liquid fuel while said liquid fuel flowing in said fuel feed. Said flow body comprises a surface with at least one outlet opening wherein said gas could exhaust (from inside the - hollow - flow body) through said at least one outlet opening into said liquid fuel while said liquid fuel passing/circulate around said flow body. While this exhausting of the gas said liquid fuel is aerated with said gas.

The invention is based on the insight, that aerating liquid fuel with gas - while producing bubbles in the gas - will reduce a density of liquid fuel and will increase a volume of liquid fuel. The change of density of liquid fuel leads to a reduction of a pressure head of a mixture - injected for ignition. The change of density further leads to an increase of the pressure in the fuel feed to compensate for the increased volume being fed, i.e. pumped through.

The invention is also based on the insight, that increasing the pressure of the fuel in the fuel feed the impact by the pressure head could significantly be reduced - particularly during the start/ignition of the gas turbine - without requiring variable geometry or separate fuel gas.

By providing the fuel feed, i.e. fuel line, downstream of a fuel pump, but upstream of a fuel manifold with a mixing section, i.e. aeration section/system, according to the invention, particularly containing a bluff body with a perforation through which the gas, especially shop air (pressurized air from a source outside the gas turbine), can be introduced to the liquid fuel, the density of the liquid fuel is reduced, i.e. the volume of the liquid fuel is increased. The pressure head of the injected mixture is reduced and the pressure in the fuel feed is increased to compensate for the increased volume being fed, i.e. pumped through. A more evenly distribution of fuel to the burners - to higher burners as well as to lower burners - could be realized. This makes it more easier for all the burners to ignite.

These effects will lead to a more reliable, easier ignition of the fuel and the gas turbine to start - not striving to improve the fuel spray as the lower burners already ignite. The spray quality will remain "poor" even after the aeration.

The invention offers a robust, low cost, low maintenance alternative to variable geometry burner/nozzle - utilising resources already available (pressurised air) on site.

In a preferred embodiment said flow body comprises several outlet openings increasing the effectiveness of aerating the liquid fuel. Each of the outlet openings could have the same size. Alternatively, the outlet openings could have different sizes.

Furthermore, the size of a outlet opening in general, the size of the surface of the flow body as well as the pressure of the gas and a (aeration) mixing rate of the gas and the liquid fuel - all effecting a grade of aeration - could be a function of a size of said gas turbine, particularly of a size of a combustion system of said gas turbine. Gas turbines of larger size, i.e. combustions systems of larger size, are more susceptible to gravitational effects by the location of the burner over ground - relative to neighbouring burners - and are more susceptible to pressure head losses which could be countered by a higher aeration using the invention.

In a further preferred embodiment the flow body is formed, i.e. shaped, as a perforated bluff body, wherein a grade of said perforation could be a function of a size of said gas turbine, particularly of a size of a combustion system of said gas turbine, again, i.e. according to the effects described above.

It could be practicable to define a form or shape of the flow body in dependence of geometry of the fuel feed. Albeit, the flow body could preferable be formed as a ball, a tube, especially with a annular, polygon, elliptical or oval cross section, or as an elongated body - as well as spherical, in a blocker bar style or in submarine/probe style.

In a further preferred embodiment said gas turbine comprises a Dry Low Emissions (DLE) combustion system supplied with the aerated liquid fuel, particularly during a start up phase of said Dry Low Emission (DLE) combustion system. Particularly in case of DLE combustion systems the liquid fuel could be a premium fuel, particularly a heating oil.

In a preferred embodiment the pressure of the liquid fuel before use of aeration - and particularly during starting the turbine - could be about 2 - 3 bar and/or the pressure of the aerated liquid fuel could be about 5 -6 bar. Furthermore the gas could be a highly compressed air, particularly a shop air with said pressure about 7 - 10 bar. Preferable a (aeration) mixing rate is about.1:1.

It could be advantageous if the aeration system according to the invention is located downstream of a pump pumping the liquid fuel through said fuel feed and located upstream to a manifold, especially a fuel manifold, of a conduit system providing a burner can of said gas turbine, particularly of a combustion system of said gas turbine, with the liquid fuel.

The gas under pressure could be provided by an external source. Preferable, the gas is an instrumentation gas/air or a shop air. Shop air is normally available at about 7 - 10 bar.

In a further preferred embodiment the system according the invention is used for supplying a Dry Low Combustion system of the gas turbine with aerated liquid fuel, particularly during a starting phase of the Dry Low Combustion system. The aeration of the liquid fuel could be gradually reduced and switched off when a ignition of the DLE combustion system has taken place and/or a combustion of said gas turbine is stable.

In other words, the invention could be preferable used for supplying the gas turbine with aerated liquid fuel while starting said gas turbine, particularly while an ignition of said gas turbine, particularly of a Dry Low Combustion system of said gas turbine is taking place. The aeration could be gradually reduced and switched off when said ignition of said gas turbine has taken place and/or the combustion of said gas turbine is stable. While switched off the flow body, particularly a perforated bluff body, could generate a low but equal pressure drop for all burners of the combustion system.

In a further preferred embodiment the invention is used in a Dry Low Emission gas turbine for reducing a density of a premium fuel, for example a heating oil, for the Dry Low Emission combustion during a starting phase, i.e. an ignition phase, of the DLE gas turbine. Reducing the density, i.e. increasing the volume, of the fuel - during the starting phase - leads to a reduction of the pressure head of the injected mixture. The change of density further leads to an increase of the pressure in the fuel feed to compensate for the increased volume being fed.

### Brief description of the drawings

A detailed description of the present invention is provided below with reference to following diagrammatic drawings, in which:
- Figure 1: is a cross-sectional view of a embodiment of a gas turbine according to the invention;
- Figure 2: is a sectional view of a combustion system with an annular array of combustors contained in the gas turbine according to Figure 1;
- Figure 3: is a diagrammatic representation of an aeration of liquid fuel with gas for a gas turbine according to the invention;
- Figure 4: is a cross-sectional view of a mixing section, i.e. aeration section/system, according to an embodiment of the invention;
- Figure 5: is a cross-sectional view of a mixing section, i.e. aeration section/system, according to an embodiment of the invention;
- Figure 6: is a cross-sectional view of a mixing section, i.e. aeration section/system, according to an embodiment of the invention.

### Detailed Description of illustrated Embodiments

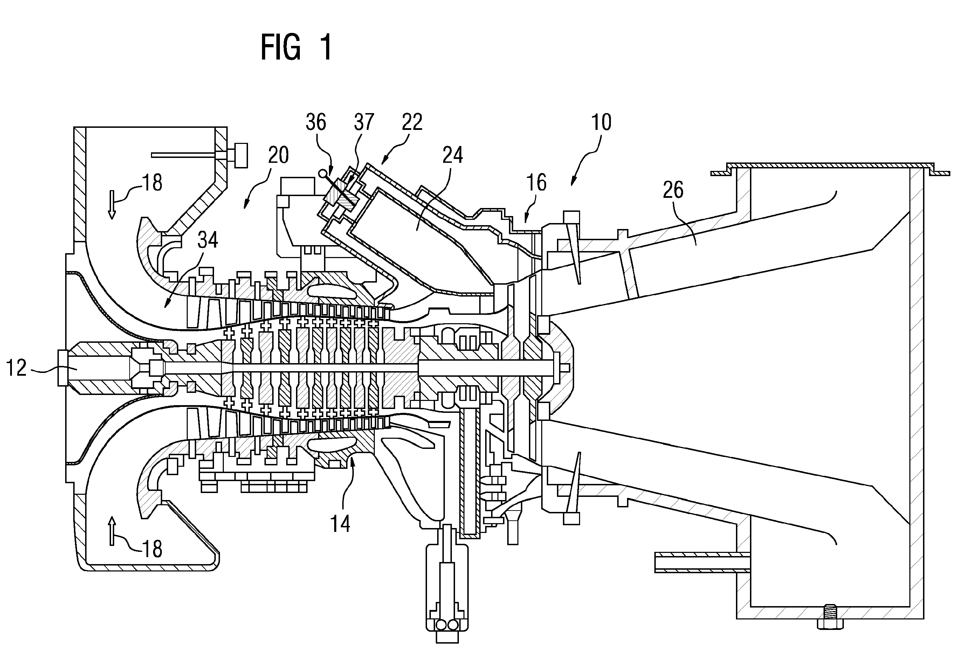

Figure 1 is an embodiment of a gas turbine 10 in the form of a single-shaft gas turbine. The gas turbine 10 comprises a single rotor shaft 12 carrying both a compressor 14 and a power turbine 16. A gas duct 34 guides a propulsion gas 18 through the turbine 10 starting from an inflow section 20 via the compressor 14, a combustion section/system 22, the power turbine 16 and an exhaust duct 26.

At the left end of the turbine 10 according to Figure 1 the propulsion gas 18 in the form of air flows via an inflow section 20 into the compressor 14. The compressor 14 thereupon compresses the propulsion gas 18. The propulsion gas 18 then enters the combustion system/section 22 of the turbine 10, in which it is mixed with fuel and ignited in combustors 24. The combustion section 22 contains an annular array of (six) combustors 24, of which only one of six is shown in Figure 1. The combusted propulsion gas 18 flows through the turbine 16 expanding thereby and driving the rotor shaft 12. The expanded propulsion gas 18 then enters an exhaust duct 26.

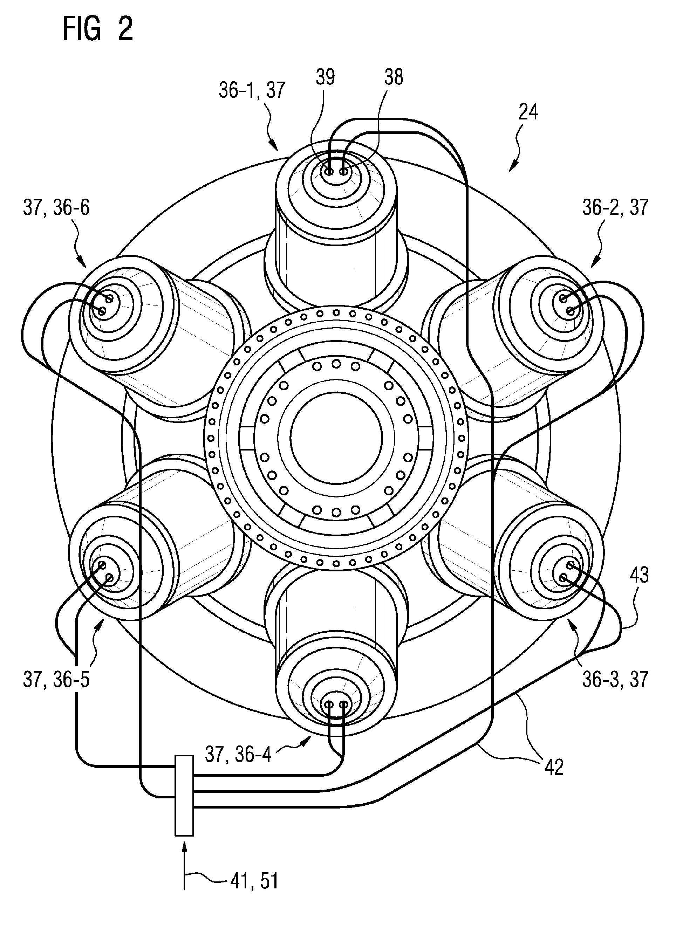

The (six) combustors 24 arranged - as illustrated in Figure 2 in more detail - in an annular array - each comprise a burner 36 for introducing fuel into the inside of the corresponding combustor 24 and igniting the fuel/air mixture. Each burner 36 comprises a pilot burner 37. The burners 36, i.e. pilot burners 37, are supplied with fuel, which is pumped through a fuel feed/line downstream a fuel pump 50 upstream to a fuel manifold 51, i.e. a fuel inlet 41, for the combustion system 24.

The burners 36 are supplied with the fuel by a main conduit system 42 as well as a pilot conduit system 43 both connecting the burners 36 and pilot burners 37 with the fuel line 49 using separate conduits (not shown). The burners contain fuel inlets 38, 39 for introducing the fuel into the burner 36 and pilot burner 37.

The pilot fuel is subsequently guided to a burner face where it is introduced to the combustion camber.

By arranging the six combustors 24 in an annular array the burners 36-1, 36-2, and 36-3 are located higher over ground than the burners 36-3, 36-4, and 36-5 leading to gravitational effects, i.e. pressure head loss, influencing the distribution of the fuel to the higher burners 36-1, 36-2, and 36-6 and lower burners 36-3, 36-4, and 36-5.

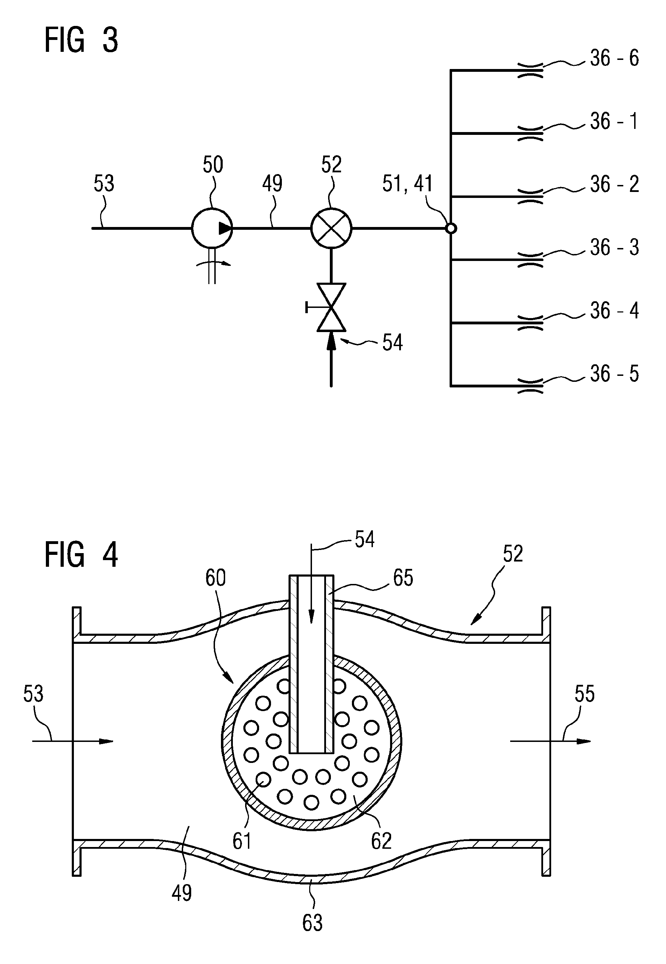

Figure 3 is showing a diagrammatic representation of the fuel line 49 downstream of a fuel pump 50 and upstream of the fuel manifold 51, i.e. the fuel inlet 41, with a mixing section, a aeration section/system 52, for aerating the liquid fuel 53 with gas/air, i.e. shop air 54.

The aeration section 52 contains a bluff body 60 comprising a perforation 61 through which the shop air 54 - supplied by a external air source - is introduced to the liquid fuel 53. A typical feed pressure for the liquid fuel 53 during start is 2 - 3 bar, whereas the shop air 54 is typically available at 7 - 10 bar.

Figures 4 - 6 are showing the aeration section 52 in more detail illustrating different embodiments of the bluff body 60 according to the invention.

Figure 4 is showing the bluff body 60 being formed as a ball, arranged in the fuel line 49 to be flown by, i.e. circulated around by, the liquid fuel 53 and supplied with the shop air 54 by a tube 65 empty into the bluff body 60 from outside. The surface 62 of the bluff body 60 is perforated 61 wherein the shop air 54 could exhaust (from inside the bluff body 60) into the liquid fuel 53 while that liquid fuel 53 passing/circulate around the bluff body 60. Downstream the bluff body 60 the aerated liquid fuel 55 is fed to the fuel manifold 51 as shown in Figure 3.

To assure an advantageous circulation of the liquid fuel 53 around the bluff body 60 to be aerated the fuel feed/line 49 is extended 63 in the range of the bluff body 62.

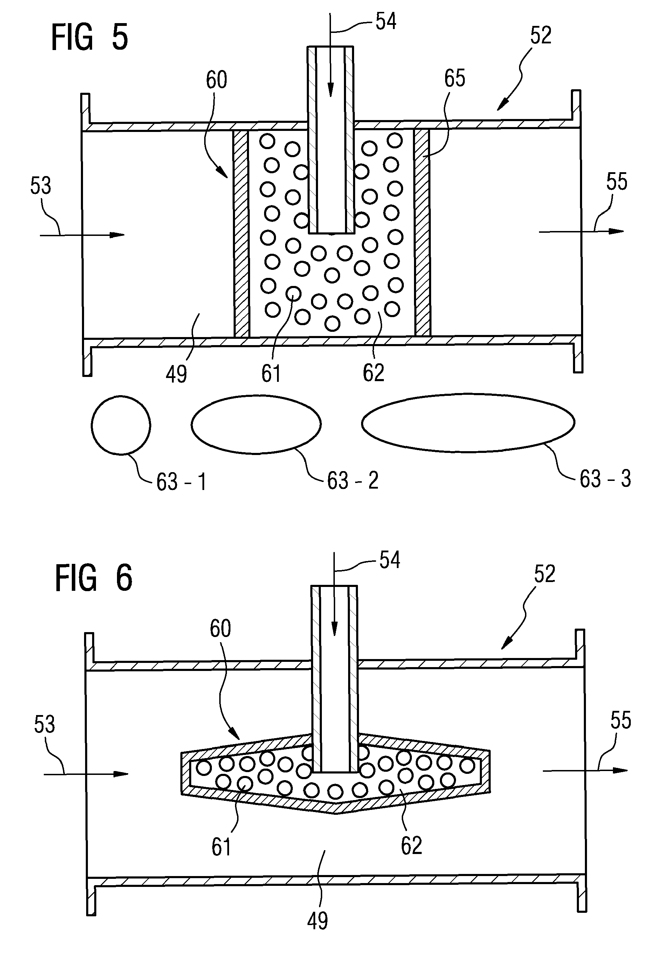

Figure 5 is showing the bluff body 60 being formed in a blocker bar style, arranged in the fuel line 49 to be flown by, i.e. circulated around by, the liquid fuel 53 and supplied with the shop air 54 by a tube 65 empty into the bluff body 60 from outside. The surface 62 of the blocker bar style bluff body 60 is perforated 61 wherein the shop air 54 could exhaust into the liquid fuel 53 while that liquid fuel 53 passing around the bluff body 60. Downstream the bluff body 60 the aerated liquid fuel 55 is fed to the fuel manifold 51 as shown in Figure 3.

As further shown in Figure 5 - the cross section of the blocker bar style bluff body 60 could be realized circular 63-1 or in different elliptical forms 63-2, 63-3.

Figure 6 is showing the bluff body 60 formed as in submarine/probe style, arranged in the fuel line 49 to be flown by, i.e. circulated around by, the liquid fuel 53 and supplied with the shop air 54 by a tube 65 empty into the bluff body 60 from outside. The surface 62 of the submarine/probe style bar style bluff body 60 is perforated 61 wherein the shop air 54 could exhaust into the liquid fuel 53 while that liquid fuel 53 passing around the bluff body 60. Downstream the bluff body 60 the aerated liquid fuel 55 is fed to the fuel manifold 51 as shown in Figure 3.

### Handling of the aeration:

The aeration of the liquid fuel 53 by the shop air 54 will operate during the staring phase of the gas turbine 10. The aeration section 52 contains the bluff body 60 comprising the perforation 61 through which the shop air 54 is introduced to the liquid fuel 53. A typical feed pressure for the liquid fuel 53 during start is 2 - 3 bar, whereas the shop air 54 is typically available at 7 - 10 bar.

When the ignition has taken place and the combustion is stable the portion of shop air injected is gradually reduced and switched off. The perforated bluff body generates a low but equal pressure drop for all burners 36 when the aeration, i.e. the shop air, is switched off.

## Claims

1. System for aerating liquid fuel (53) with gas (54) for a gas turbine (10), comprising
- a fuel feed (49) for providing a gas turbine (10) with liquid fuel (53),
- a flow body (60) with a feed (65) providing said flow body (60) with gas (54) under pressure higher than a pressure of said liquid fuel (53),
- said flow body (60) arranged in said fuel feed (49) flown by said liquid fuel (53) while flowing in said fuel feed (49),
- said flow body (60) comprising a surface (62) with at least one outlet opening (61) for aerating said liquid fuel (53) with said gas (54).

2. System according to claim 1, wherein said flow body (60) comprises several outlet openings (61), particularly each of the same size or of different size wherein the size will be a function of a size of said gas turbine (10), particularly of a size of a combustion system (22) of said gas turbine (10).

3. System according to any one of the preceding claims, wherein said flow body (60) is perforated (61), particularly said flow body (60) is a perforated bluff body (60, 61).

4. System according to claim 3, wherein a grade of said perforation (61) of said flow body (60) is a function of a size of said gas turbine (10), particularly of a size of a combustion system (22) of said gas turbine (10).

5. System according to any one of the preceding claims, wherein said flow body (60) is formed as a ball, a tube, especially with a annular, polygon, elliptical or oval cross section, as an elongated body, spherical, in a blocker bar style or in submarine/probe style.

6. System according to any one of the preceding claims, wherein said gas turbine (10) comprises a Dry Low Emissions (DLE) combustion system (22) supplied with the aerated liquid fuel (53), particularly during a start up phase of said Dry Low Emission (DLE) combustion system (22).

7. System according to any one of the preceding claims, wherein said system is located downstream of a pump (50) pumping said liquid fuel (53) through said fuel feed (49) and/or wherein said system is located upstream to a manifold (51), especially a fuel manifold (51), of a conduit system (42, 43) providing a burner can (36) of said gas turbine (10), particularly of a combustion system (22) of said gas turbine (10), with said liquid fuel (53).

8. System according to any one of the preceding claims, wherein said gas under pressure (54) is provided by an external source, particularly said gas under pressure (54) is an instrumentation gas/air or a shop air, and/or wherein said liquid fuel (53) is premium fuel, particularly a heating oil used for Dry Low Emission combustion.

9. System according to any one of the preceding claims, wherein said pressure of said liquid fuel (53) before use of said aeration is about 2 - 3 bar and/or wherein a pressure of the aerated liquid fuel (55) is about 5 -6 bar.

10. System according to any one of the preceding claims, wherein a mixing ratio of said gas (54) and liquid fuel (53) is a function of a size of said gas turbine (10), particularly of a size of a combustion system (22) of said gas turbine (10), particularly said mixing ratio is about 1:1.

11. System according to any one of the preceding claims, used for supplying said gas turbine (10), particularly a Dry Low Combustion system (22) of said gas turbine (10), with aerated liquid fuel (55), particularly during a starting phase of said gas turbine (10), particularly of a Dry Low Combustion system (22) of said gas turbine (10), and used in such a way that an aeration of said system is gradually reduced and switched off when a ignition of said gas turbine (10) has taken place and/or a combustion of said gas turbine (10) is stable.

12. System according to any one of the preceding claims, wherein said gas (54) is a highly compressed air, particularly with said pressure about 7 - 10 bar.

13. Method for aerating liquid fuel (53) with gas (54) for a gas turbine (10), said method comprising the steps of
- providing a source of a gas under pressure (54) higher than a pressure of said liquid fuel (53),
- supplying a flow body (60) comprising at least one outlet opening (61) with said gas under pressure (54),
- flowing said flow body with said liquid fuel (53) and
- aerating said liquid fuel (53) with said gas (54) while exhausting said gas (54) through said at least one outlet opening (61) of said flow body (60) into said liquid fuel (53) while said liquid fuel (53) passing said flow body (60).

14. Method according to any one of the preceding method claims, wherein said method is used for supplying said gas turbine (10) with aerated liquid fuel (55) while starting said gas turbine (10), particularly while an ignition of said gas turbine (10), particularly of a Dry Low Combustion system (22) of said gas turbine (10), and gradually reducing and switching off said aeration when said ignition of said gas turbine (10) has taken place and/or a combustion of said gas turbine (10) is stable.

15. Method according to any one of the preceding method claims, wherein said method is used for producing bubbles in said liquid fuel (53) and/or wherein said method is used for reducing a density of said liquid fuel (53), particularly while providing said gas turbine (10) with said liquid fuel (55) of lower density during an ignition phases of said gas turbine (10), and/or wherein said method is used for reducing a pressure head of said liquid fuel (53), particularly while providing said gas turbine (10) with said liquid fuel (55) of reduced pressure head during an ignition phases of said gas turbine (10).
